# EUROPEAN PATENT SPECIFICATION

(11) **EP 2 032 221 B1**
(45) Date of publication and mention of the grant of the patent: **12.02.2020**
(21) Application number: 07733146.0
(22) Date of filing: 08.06.2007
(51) Int. Cl.: A63C 19/10, A63B 69/18, E01C 13/10

(54) **SPORTS FACILITY**
SPORTEINRICHTUNG
INSTALLATION SPORTIVE

(30) Priority: 09.06.2006 GB 0611384
(43) Date of publication of application: 11.03.2009
(73) Proprietor: Dent, Kyle Graham John, Exmouth Devon EX8 1QN (GB)
(72) Inventor: Dent, Kyle Graham John, Exmouth Devon EX8 1QN (GB)
(74) Representative: Mudge, Kevin
(86) International application number: PCT/GB2007/002136
(87) International publication number: WO 2007/141546

(56) References cited:
- EP-A2- 0 384 383
- WO-A-95/28997
- WO-A-2006/017971
- FR-A- 1 418 835
- FR-A1- 2 757 415
- US-A- 3 251 596

## Description

This invention relates to sport facilities and is concerned with the provision of an improved form of sports facility.

The facilities currently available in many countries, for example the United Kingdom, for, for example, skiing, skateboarding and snowboarding are limited and it is an object of the present inventions to provide a novel form of sports facility that can be used for such sports. Further, the facilities for many sports, such as surfing, are available only in certain parts of the country and, even then, their use is dependent on the weather. A further object of the present invention is the provision of a facility for practising surfing. In particular, there is a need for a facility having an artificial surface that more closely resembles the natural conditions experienced in such activities as surfing, skiing, snowboarding, skateboarding and the like.

A number of attempts have been made to provide an artificial surface for skiing, snow boarding and the like. US 4,087,088 discloses a moving artificial ski surface construction in which a support surface comprising an energy absorbing base of elastomer is employed. The energy absorbing base is covered by a flexible sheath having a continuous surface. Fibres extend upwards from the surface of the sheath to provide an artificial ski surface. The support surface is arranged to provide a slope. The continuous surface of the sheath forms an endless belt, mounted on rollers. The rollers are driven by a motor to move the continuous surface. While the moving surface may act as an artificial slope for skiing, its form is very limited and is not suitable to providing a range of surface conditions on which a person may ski.

GB 2,288,544 discloses an artificial ski slope having an artificial skiing surface. The surface comprises a plurality of rollers, at least some of which extend at an angle to the notional longitudinal centre line of the slope. The rollers are mounted so as to be freely rotatable, whereby a person passing over the rollers on skis cause the rollers to rotate. It is alleged that this mimics a natural skiing surface and duplicates the skiing experience for the user. The pitch and angle of the rollers may be varied at different locations on the slope to provide a variation in the skiing properties of the surface.

Further, GB 2,365,787 is concerned with a rotary ski slope. The ski slope is formed by the upper surface of a large disc, mounted with its axis tilted to the vertical. A least a portion of the disc is rotatable about the main axis. The disc has a diameter of at least 100 metres, with longer slopes being obtained by using a disc of larger diameter. The disc may be divided into a plurality of concentric rings, which may be stationary or driven at the same or different speeds. It is also proposed to drive the discs in different directions. Generally, the apparatus of GB 2,365,787 is very large and cumbersome, being unsuited for use in locations where space is limited. In addition, as with other known systems, the apparatus does not provide an easily variable or realistic skiing experience for the user.

A windsurfing launch ramp assembly is disclosed in NL 9301043 A. The ramp assembly comprises an endless belt driven by a pair of rollers. The outer surface of the belt is provided with cantilevered brush-like elements, of a length sufficient to accommodate the fin or blade beneath a windsurfer. The belt is driven in the direction of the approaching windsurfer and is alleged to simulate a natural wave. While the apparatus of NL 9301943 is of use in providing an artificial launch means for a windsurfer, it is limited in its ability to accurately mimic a variety of surfaces. Further, EP0384383 discloses a sporting facility according to the preamble of claim 1.

Accordingly, there is a need for an improved means for providing an artificial slope for use with skis, a snowboard, or the like, that more closely mimics the surfaces and terrain that are encountered in a natural environment. In particular, there is a need for such a means that may be constructed to a wide range of sizes, that is, is readily scalable, to fit a wide range of locations.

According to the present invention there is provided a sporting facility comprising a plurality of rotary elements having flexible components, the rotary element being arranged so that the flexible components thereof provide a substantially continuous supporting surface, and means being provided for effecting rotation of the rotary elements.

In a first aspect, the present invention provides a sporting facility for use in a sporting activity in which a user moves on a surface, comprising a supporting structure, a plurality of rotary elements mounted on the supporting structure, each rotary element having flexible components extending from a central portion of the rotary element, the rotary elements being arranged so that the flexible components thereof provide a substantially continuous surface providing support for a user for use in a sporting activity, and means for rotating the plurality of rotary elements, wherein when the rotary elements rotate the flexible components are caused to rotate in a plane extending at an angle perpendicular to the substantially continuous surface characterised in that the means for rotating the rotary elements comprises a motor and wherein the flexible components comprise filaments, bristles or fibres.

In the sporting facility of the present invention, a substantially continuous surface is formed by the surfaces of a plurality of rotary elements. In this respect, the term 'substantially continuous surface' is a reference to the surface provided by a plurality of rotary elements disposed sufficiently close together such that a person using skis, a snow-board, a surf board or like, may travel across the surfaces of the rotary elements without undue restraint or problem, as if travelling across a continuous surface, such as that provided by snow, ice or water. It will be appreciated that the distance between adjacent rotary elements and their size are to be selected accordingly.

The rotary elements may be of any suitable form and include rollers. Preferably, the rotary elements are in the form of discs or wheels. The rotary elements may be made of any suitable material, such materials being well known in the art. Preferred materials include plastics, in particular Nylon™. Other suitable materials will be apparent to the person skilled in the art.

The rotary elements are preferably disposed to rotate at an angle to the substantially continuous surface, that is in a plane at an angle to the surface, in particular perpendicular to the said surface. All of the rotary elements may be arranged to rotate at the same angle to the substantially continuous surface, for example all rotary elements rotating perpendicular to the surface. Alternatively, the rotary elements in one portion of the surface may be arranged to rotate at a first angle and the rotary elements in a second portion of the surface disposed at a second angle, different to the first in this way, the properties of the surface as experienced by the user passing over the rotary elements may be varied from one portion to another.

The rotary elements may be arranged in any suitable pattern so as to generate the desired surface. A particularly preferred embodiment is one wherein the rotary elements are arranged in a plurality of rows, each row comprising a plurality of rotary that is the longitudinal axes of the adjacent rows are parallel, at least across a portion of the surface, more preferably the entire surface.

The rows of rotary elements may be spaced apart by any suitable distance, provided that the rotary elements combined to provide a substantially continuous surface on which a user may ride using skis, a snow board, a surf board or the like. In one preferred arrangement, the rotary elements of one row are disposed to extend into the spaces between the rotary elements of an adjacent row, that is to form an interdigitated pattern. It has been found that this arrangement of interdigitated rotary elements provides a particularly advantageous assembly that is able to more accurately mimic a variety of natural surfaces and features, such as snow, ice, waves and the like. The interdigitated pattern may be such that a rotary element from one row is adjacent and between two rotary elements of the adjacent row. Alternatively, several rotary elements of one row, that is a block of elements, may be interposed between two blocks of the adjacent row. Again, the pattern of interdigitation may be used to vary the properties of the surface.

As noted hereinbefore, the rotary elements of this aspect of the invention are provided with flexible components extending therefrom, the surface of the flexible components defining the substantially continuous surface. In use, the flexible components are contacted by the skis or board of the user. The properties of the surface and the experience of the user are determined by the flexibility of the flexible components, their shape and the speed of rotation of the rotary elements. The flexible components are in the form of bristles, filaments or fibres. In this case, the rotary elements act as rotating brushes.

The rotary elements may have any suitable cross sectional shape, such as circular or rectangular. The precise cross-sectional shape may be selected to provide the desired properties from the substantially continuous surface.

The filaments or fibres may have any suitable length and diameter. In a preferred arrangement, the filaments or fibres have a diameter of from 0.1 to 5 mm, more preferably from 0.25 to 2.5 mm. For a given material, filaments having a larger diameter will be stiffer and yield and flex less under the weight of the user. In this way, the properties of the surface may be varied. The facility may employ filaments or fibres of the same diameter. Alternatively, the flexible components of the rotary elements in a first portion of the substantially continuous surface have a first diameter and the flexible components of the rotary elements in a second portion of the substantially continuous surface have a second diameter, different to the first diameter, in order to provide a variation in the properties of the surface in different portions. The length of the filaments or fibres will also vary the properties of the surface. The filaments or fibres are preferably from 30 to 200 mm in length, more preferably from 50 to 100 mm. Similarly dimensions may be applied to flexible elements of other shapes and designs.

The substantially continuous surface may be planar in whole or in part. Alternatively, and more preferably, the rotary elements are disposed to form a surface having at least a portion that is curvilinear. The presented surface afforded by the array of rotary elements, such as wheels/brushes, is preferably of curvate form so as to afford a simulation wave.

Means are provided to rotate the rotary elements. Suitable means are known in the art and are motors, in particular electric motors. The rotary elements may be mounted so as to be rotated individually. Alternatively, a plurality of rotary elements may be mounted on a single shaft, the rotation of which effects rotation of all of the plurality of rotary elements. Each rotary element or, if used, each shaft may be driven directly by a respective motor, with or without a suitable gear assembly or the like. Alternatively, a single motor may be employed to rotate a plurality of rotary elements or, if employed, shafts. In such a case, the drive may be transmitted by any suitable means, for example one or more of chains, belts, or sprockets.

The drive means may be arranged to rotate all the rotary elements at the same speed. An alternative embodiment is one wherein the means for rotating the rotary elements are adapted to rotate the rotary elements in a first portion of the substantially continuous surface at a first speed and to rotate the rotary elements in a second portion of the substantially continuous surface at a second speed, different to the first speed. In this way, variations in the speed of rotation may be used to vary the properties of different portions of the surface. portion of the substantially continuous surface at a second speed, different to the first speed. In this way, variations in the speed of rotation may be used to vary the properties of different portions of the surface.

The rotary elements may be arranged to rotate in the same direction. Alternatively, the drive means may be adapted to rotate the rotary elements in a first portion of the substantially continuous surface in one direction and the rotary elements in a second portion of the said surface in the opposite direction.

The facility may present the rotary elements to the user to form the substantially continuous surface. More preferably, the facility is provided with a protective member extending over the rotary elements, the protective element being provided with a plurality of openings therein, flexible components of each rotary element extending through an opening in the protective member. In this way, only the flexible components are presented to the user and exposed: Proper sizing of the apertures to closely match the rotary elements will allow the protective member to prevent the user from being harmed by contact with the rotary elements, the shafts if used, and the drive means, for example in the event of a fall.

The facility preferably further comprises a control system for controlling the operation of the means for rotating the rotary elements, for example their speed and direction of rotation. The control system preferably comprises a control device for use by an operator, the control device being remote from the control system and the sporting facility. The control device is preferably a hand-held device, capable of being held by a person using the sporting facility. The hand-held device preferably is arranged with a switch that activates the facility while being held and deactivates the facility when released. In this way, the user may release the control device in the event of a fall, which will stop the rotation of the rotary elements, in turn improving safety of the system. Preferably, the means for rotating the rotary elements and/or the rotary elements themselves are provided with means for effecting an emergency stop, such as a braking means or the like.

As noted and described hereinbefore, one preferred arrangement is for the rotary elements to be arranged in rows and in an interdigitated pattern. Accordingly, in interdigitated pattern, the surfaces of the rotary elements combining to form a substantially continuous surface.

The rotary elements and their arrangement may be as hereinbefore described. The rotary elements may be freely rotational or may be rotated by a suitable drive means, again as hereinbefore described.

As also noted above, in a preferred embodiment, the rotary elements are arranged to provide a substantially continuous surface that is curvate or curvilinear. This embodiment is particularly advantageous when providing a facility for surfing. Accordingly, in a further aspect, the present invention provides a sporting facility comprising a plurality of rotary elements, the surfaces of the rotary elements combining to form a substantially continuous curvilinear surface.

Again, the form and arrangement of the rotary elements and, if used, the drive means, are as hereinbefore described.

In a further aspect, not part of the invention, the present disclosure provides the use of a sporting facility as hereinbefore described to provide an artificial surface for skiing, snow-boarding, skateboarding or the like.

In still a further aspect, not part of the invention, the present disclosure provides a method of providing an artificial surface for skiing, snow-boarding, surfing, skateboarding or the like, the method comprising providing a plurality of rotary elements, the rotary elements being arranged such that their surfaces provide a substantially continuous surface, and rotating the rotary elements.

Preferably, the rotary elements comprise flexible components extending therefrom, the flexible components defining the substantially continuous surface.

The rotary elements are preferably caused to rotate at an angle to the substantially continuous surface, more preferably perpendicular thereto.

As described hereinbefore, the rotary elements in a first portion of the substantially continuous surface may be caused to rotate at a first speed and the rotary elements in a second portion of the substantially continuous surface are caused to rotate at a second speed, different to the first speed.

The method is preferably used to provide a substantially continuous surface that is curvilinear.

Embodiments of the present invention will now be described, by way of example only, having reference to the accompanying drawings, in which:
Figure 1 of the drawings is a perspective view of a part of a sports facility of a first embodiment of the present invention;
Figure 2 is a plan view of the part of the sports facility shown in Figure 1;
Figure 3 is a side view of the part of the sports facility shown in Figure 1;
Figure 4 is a front view of the sports facility shown in Figure 1;
Figure 5 is an enlarged portion of the plan view of Figure 2;
Figure 6 of the drawings is a perspective view of a part of a sports facility of a second embodiment of the present invention;
Figure 7 is a plan view of the part of the sports facility shown in Figure 6;
Figure 8 is a side view of the part of the sports facility shown in Figure 6; and
Figure 9 is an enlarged portion of the plan view of Figure 7.

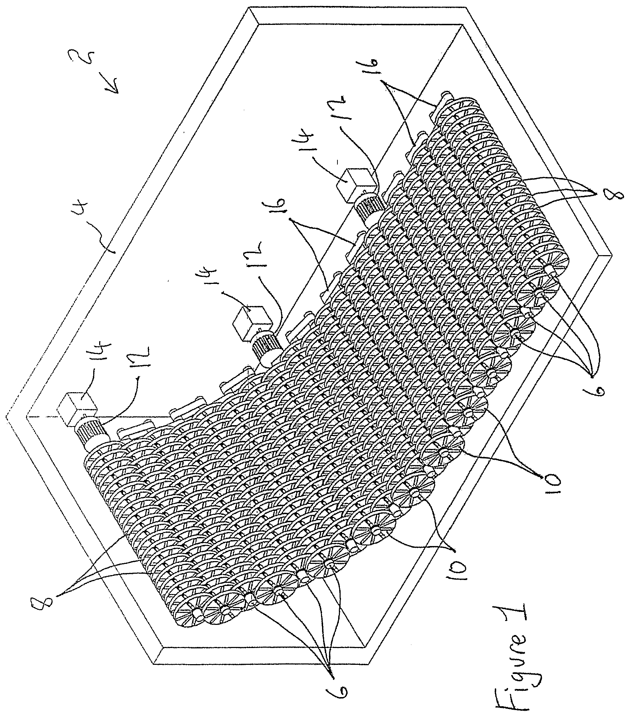

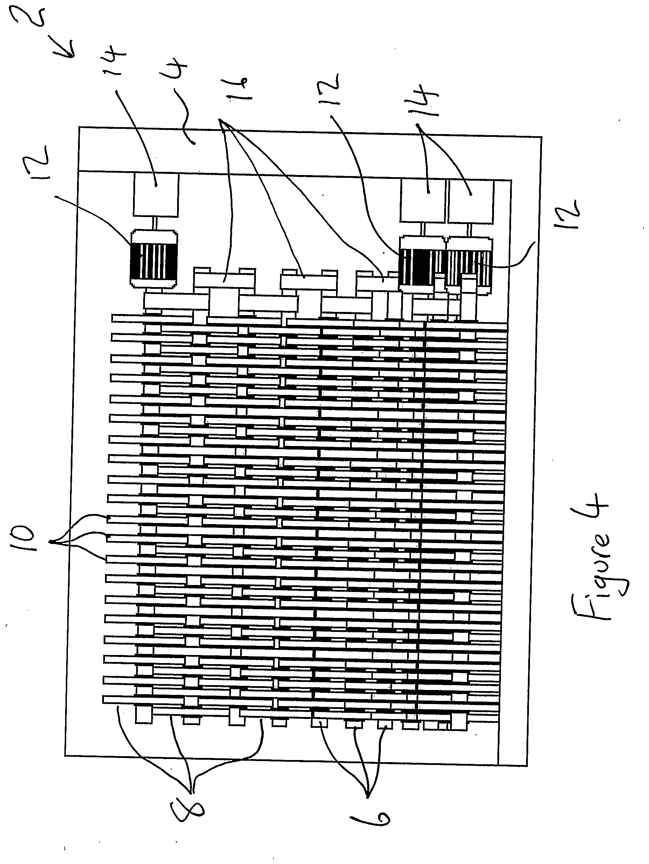

Referring to Figures 1 to 5, there is shown a sports facility, generally indicated as 2, according to a first embodiment of the present invention. The sports facility can be used for practising surfing, snowboarding, skateboarding or skiing and the like. In this respect, the facility may be used for any activity that involves or requires a user to move or slide along or down a surface, in particular under the force of gravity, especially using an apparatus to contact the surface and on which the user stands, lies or sits.

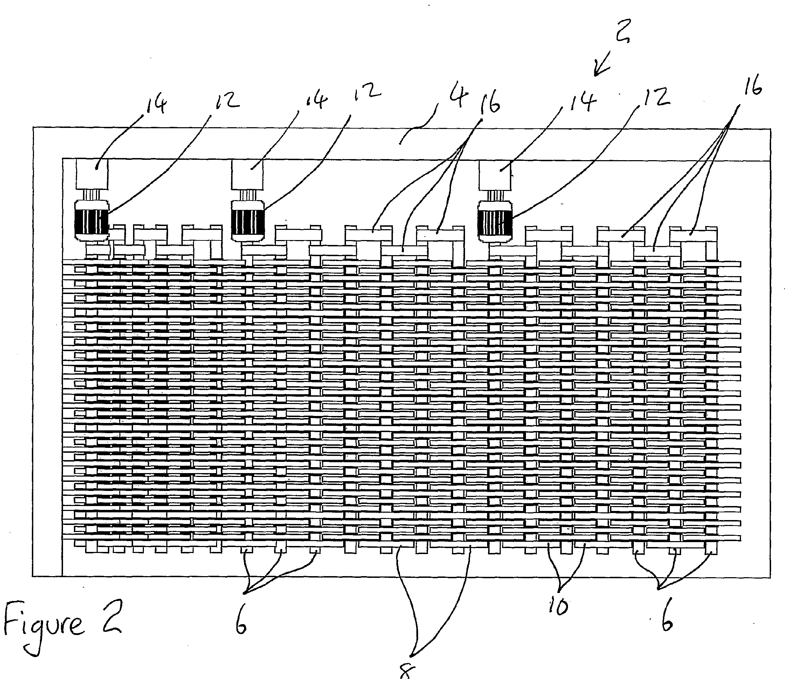

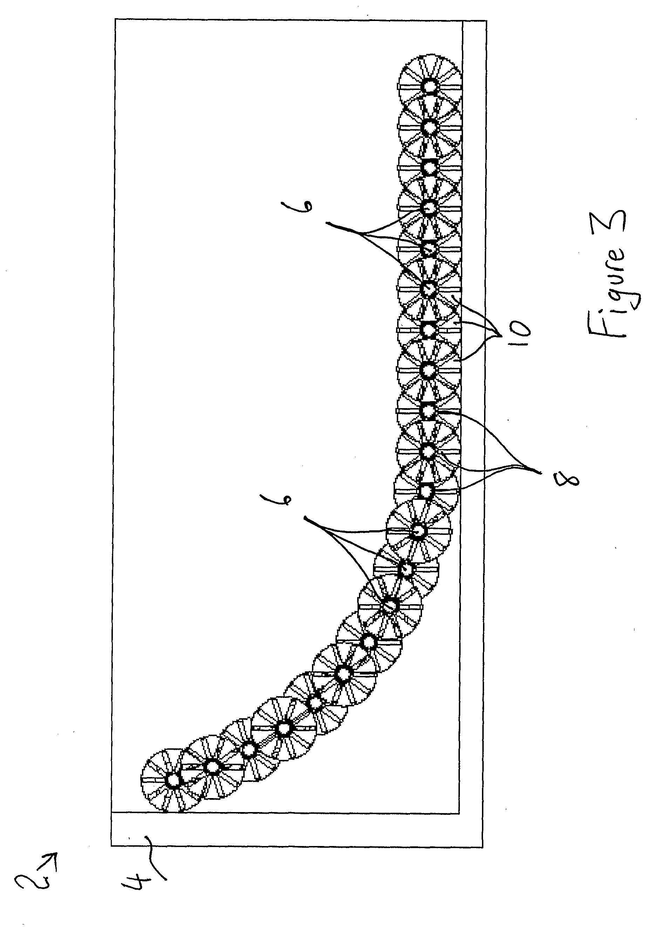

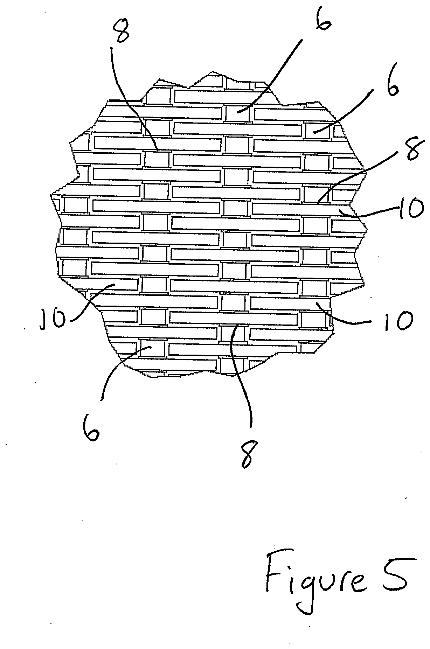

The sports facility 2 comprises a supporting structure 4, such as a frame or the like. A plurality of shafts 6 are mounted on the supporting structure 4 in suitable bearings or the like (not shown for clarity) so as to be rotatable. The shafts 6 extend parallel to one another and are arranged in an arcuate or curved pattern, as shown in Figures 1 and 3. Each shaft 6 is provided with a plurality of rotary elements in the form of wheels 8, each wheel 8 being mounted on the respective shaft 6 for rotation therewith and extends perpendicular to the shaft. The wheels 8 are arranged on the shafts 6 such that the wheels of adjacent shafts are interdigitated, that is a wheel on one shaft extends into the space between two adjacent wheels extending from the adjacent shaft. This interdigitated pattern is shown in more detail in Figures 2 and 5.

Each wheel 8 is provided with a plurality of flexible components 10 extending radially outwards therefrom. The flexible components 10 are in the form of bristles or fibres, rendering the wheels 8 to act as brushes.

A drive means is provided to rotate the shafts 6. The drive means comprises electric motors 12, the operation of which is controlled by a respective inverter and speed control unit 14. The speed control unit may be controlled by a remote control device, such as a hand held device (not shown for clarity) using known technology. As shown in Figures 1 and 2, each motor 12 provides the drive for a plurality of shafts 6, with the drive being transmitted to the shafts by way of belts 16. Sprockets and/or chains may be used in the place of belts, as required.

In use, a person, for example using a snowboard, surfboard or skiis, moves over the upper portions of the flexible components 10 projecting from each wheel 8. The flexible components 10 contact the underside of the snowboard or ski and support the user, thus forming a substantially continuous surface over which the person can travel. Motion of the user is effected by gravity, as would be the case with a natural or real surface, such as a snow slope or a wave. The wheels are rotated by means of the motors. In use, the wheels and the flexible components extend and rotate perpendicular to the substantially continuous surface formed by the upper portions of the flexible components. The speed of rotation is selected to provide the desired properties to the surface. For example, the wheels may be rotated in the reverse direction of travel of the user (that is up the curved slope or counter clockwise in Figure 2) thereby slowing the descent of the user and prolonging the time spent traversing the surface. The speed and/or direction of rotation may be varied in different portions of the slope, for example by rotating one or more shafts in a portion at a given speed, in order to vary the properties of the surface. For example, the steeper portion of the curved surface (that is the left hand portion in Figure 2) may require the wheels to rotate faster, in order to hold the user steady, compared with the lower portion of the slope (that is the right hand portion in Figure 2).

The embodiment shown in Figures 1 to 5 is particularly suitable for providing an artificial wave for use by surfers, body boarders and the like.

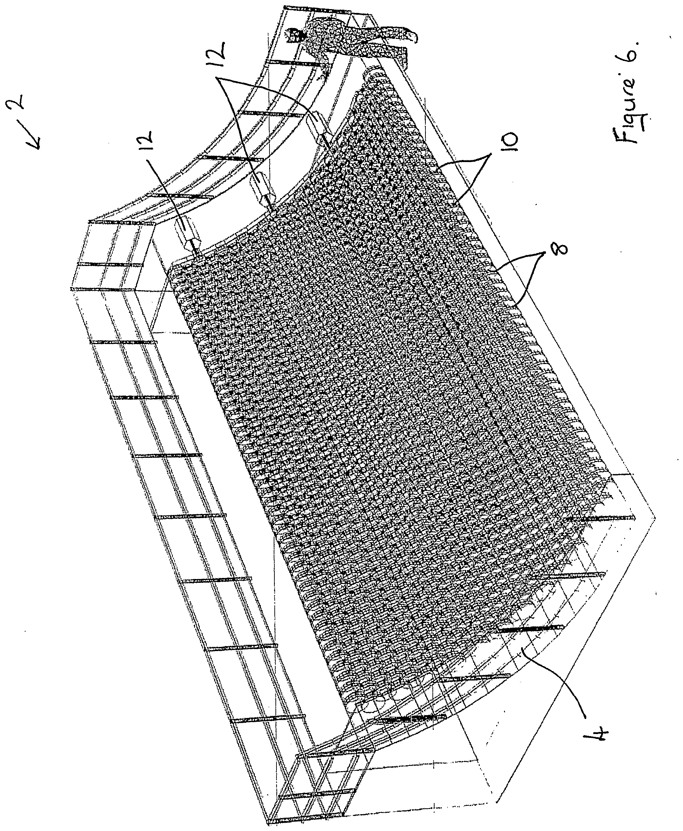

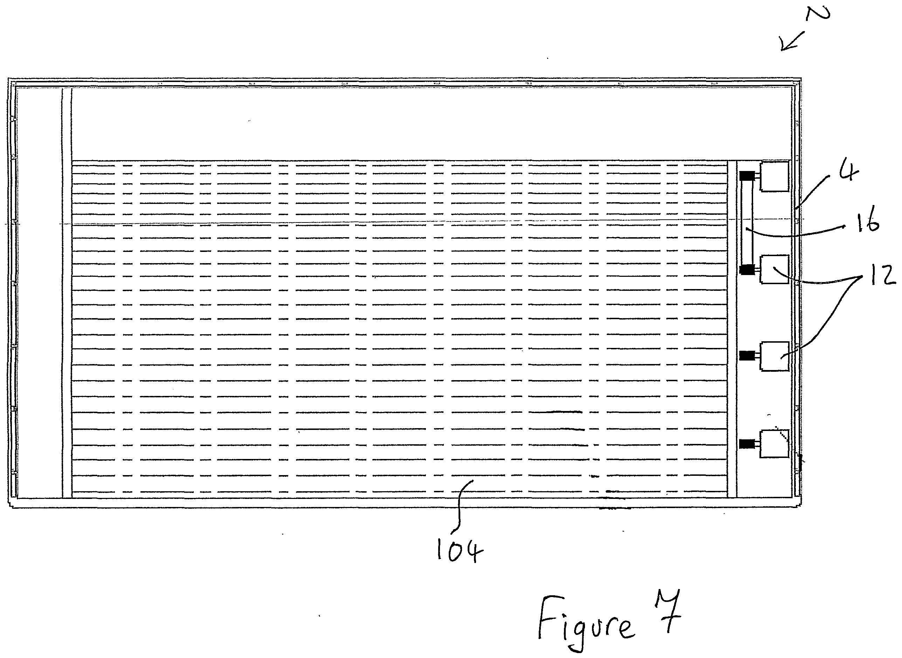

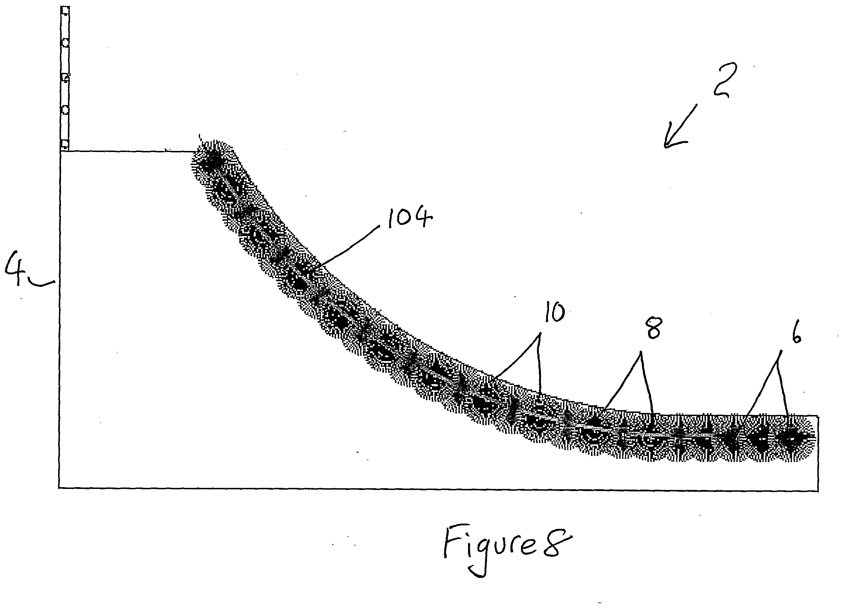

Turning to Figures 6 to 9, there is shown a second embodiment of the sports facility of the present invention, generally indicated as 102, having the same general construction and mode of operation to the embodiment of Figures 1 to 5. Accordingly, the same reference numerals have been used to identify components and features common to both embodiments and reference is made to the preceding description in respect of these common components and features.

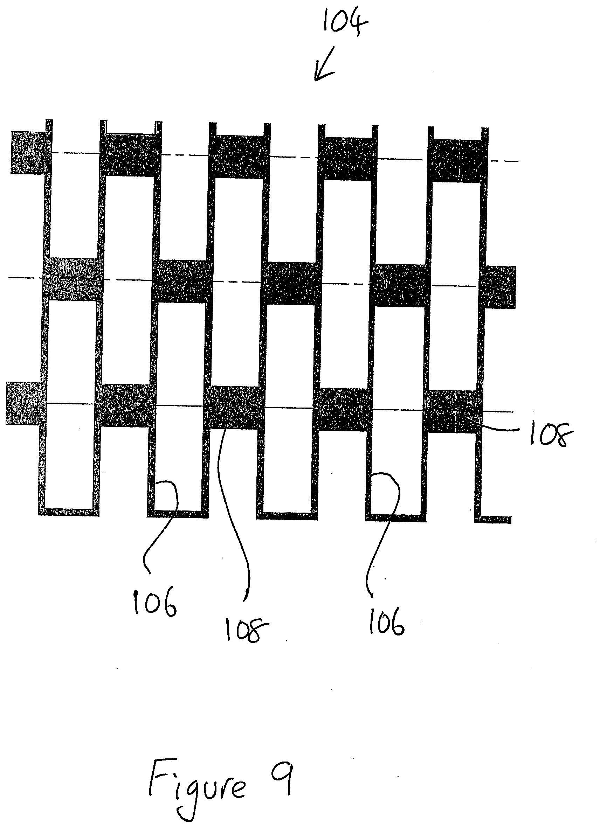

The embodiment of Figures 6 to 9 is provided with a protective member 104 extending over the uppermost part of the wheel/shaft assembly. The protective member 104 is shown in detail in Figure 9 and comprises a plurality of apertures or openings 106 therein. As shown in Figure 9, the apertures 106 are separated by lands 108. Each aperture 106 accomodates a single wheel/brush assembly, such that just the flexible components 10 of each wheel 8 extend through the aperture above the upper surface of the protective member 104. The apertures 106 are sized to closely fit the wheel/brush assembly, such that only a minimal clearance remains between the edges of each aperture 106 and the respective flexible components extending therethrough.

In use, the embodiment of Figures 6 to 9 functions as hereinbefore described. In general, the user would not contact the surface of the protective member 104. However, contact with the protective member 104 may occur, for example when executing a tight turn. In use, the protective member 104 serves to prevent the user from coming into contact with the substantial rotating components, such as the wheels and shafts, and prevents objects from passing between the wheels and shafts. This improves the overall safety of the sports facility.

It will be appreciated that the facility can occupy a substantially larger area than that shown in the drawings.

The invention thus provides a sports facility that enables participants of a number of sports to practise safely.

## Claims

1. A sporting facility (2, 102) for use in a sporting activity in which a user moves on a surface, comprising:
a supporting structure (4);
a plurality of rotary elements (8) mounted on the supporting structure (4), each rotary element (8) having flexible components (10) extending from a central portion of the rotary element (8), the rotary elements (8) being arranged so that the flexible components (10) thereof provide a substantially continuous surface providing support for a user for use in a sporting activity, and
means for rotating the plurality of rotary elements (8), wherein when the plurality of rotary elements (8) rotate, the flexible components (10) are caused to rotate in a plane extending at an angle perpendicular to the substantially continuous surface; **characterised in that** the means for rotating the rotary elements (8) comprises a motor (12); and wherein the flexible components (10) comprise filaments, bristles or fibres.

2. The sporting facility (2, 102) according to claim 1, wherein the rotary elements (8) are in the form of discs or wheels.

3. The sporting facility (2, 102) according to either of claims 1 or 2, wherein the rotary elements (8) are disposed so as to rotate perpendicular to the substantially continuous surface.

4. The sporting facility (2, 102) according to any preceding claim, wherein the rotary elements (8) are arranged in a plurality of rows, each row comprising a plurality of rotary elements (8); preferably wherein the longitudinal axes of at least some of the rows of rotary elements (8) are parallel to one another; more preferably wherein the rotary elements (8) in one or more rows are disposed to rotate perpendicular to the longitudinal axis of the respective row; more preferably wherein the rotary elements in adjacent rows are interdigitated to form an interlocking pattern.

5. The sporting facility according to any preceding claim, wherein the flexible components (10) have a diameter of from 0.1 to 5 mm, more preferably from 0.25 to 2.5 mm; in particular wherein the flexible components (10) of the rotary elements (8) in a first portion of the substantially continuous surface have a first diameter and the flexible components (10) of the rotary elements (8) in a second portion of the substantially continuous surface have a second diameter, different to the first diameter.

6. The sporting facility (2, 102) according to any preceding claim, wherein at least a portion of the substantially continuous surface is curvilinear.

7. The sporting facility (2, 102) according to any preceding claim, wherein a protective member (104) extends over the rotary elements (8), the protective element (104) being provided with a plurality of openings (106) therein, flexible components (10) of each rotary element (8) extending through an (106) opening in the protective member (104).

8. The sporting facility (2, 102) according to any preceding claim, wherein the means for rotating the rotary elements (8) are adapted to rotate the rotary elements (8) in a first portion of the substantially continuous surface at a first speed and to rotate the rotary elements (8) in a second portion of the substantially continuous surface at a second speed, different to the first speed.

## Patentansprüche

1. Sporteinrichtung (2, 102) zur Verwendung bei einer Sportaktivität, bei der ein Benutzer sich auf einer Fläche bewegt, umfassend:
eine Tragestruktur (4);
eine Vielzahl von Drehelementen (8), die an der Tragestruktur (4) montiert ist, wobei jedes Drehelement (8) flexible Komponenten (10) aufweist, die sich von einem zentralen Abschnitt des Drehelements (8) erstrecken, wobei die Drehelemente (8) derart angeordnet sind, dass die flexiblen Komponenten (10) derselben eine im Wesentlichen durchgehende Fläche bereitstellen, die für einen Benutzer eine Stütze zur Verwendung bei einer Sportaktivität bereitstellt, und
Mittel zum Drehen der Vielzahl von Drehelementen (8), wobei, wenn sich die Vielzahl von Drehelementen (8) dreht, bewirkt wird, dass sich die flexiblen Komponenten (10) in einer Ebene drehen, die sich in einem Winkel senkrecht zu der im Wesentlichen durchgehenden Fläche erstreckt; **dadurch gekennzeichnet, dass** die Mittel zum Drehen der Drehelemente (8) einen Motor (12) umfassen; und wobei die flexiblen Komponenten (10) Fäden, Borsten oder Fasern umfassen.

2. Sporteinrichtung (2, 102) nach Anspruch 1, wobei die Drehelemente (8) die Form von Scheiben oder Rädern aufweisen.

3. Sporteinrichtung (2, 102) nach einem der Ansprüche 1 oder 2, wobei die Drehelemente (8) angeordnet sind, um sich senkrecht zu der im Wesentlichen durchgehenden Fläche zu drehen.

4. Sporteinrichtung (2, 102) nach einem der vorhergehenden Ansprüche, wobei die Drehelemente (8) in einer Vielzahl von Reihen angeordnet sind, wobei jede Reihe eine Vielzahl von Drehelementen (8) umfasst; wobei vorzugsweise die Längsachsen zumindest einiger der Reihen von Drehelementen (8) parallel zueinander sind; wobei besonders vorzugsweise die Drehelemente (8) in einer oder mehreren Reihen angeordnet sind, um sich senkrecht zur Längsachse der jeweiligen Reihe zu drehen; wobei besonders vorzugsweise die Drehelemente in benachbarten Reihen ineinandergreifend sind, um ein verzahntes Muster zu bilden.

5. Sporteinrichtung nach einem der vorhergehenden Ansprüche, wobei die flexiblen Komponenten (10) einen Durchmesser von 0,1 bis 5 mm aufweisen, besonders vorzugsweise von 0,25 bis 2,5 mm; wobei insbesondere die flexiblen Komponenten (10) der Drehelemente (8) in einem ersten Abschnitt der im Wesentlichen durchgehenden Fläche einen ersten Durchmesser aufweisen und die flexiblen Komponenten (10) der Drehelemente (8) in einem zweiten Abschnitt der im Wesentlichen durchgehenden Fläche einen zweiten Durchmesser aufweisen, der verschieden vom ersten Durchmesser ist.

6. Sporteinrichtung (2, 102) nach einem der vorhergehenden Ansprüche, wobei zumindest ein Abschnitt der im Wesentlichen durchgehenden Fläche gekrümmt ist.

7. Sporteinrichtung (2, 102) nach einem der vorhergehenden Ansprüche, wobei sich ein Schutzelement (104) über die Drehelemente (8) erstreckt, wobei das Schutzelement (104) über eine Vielzahl von Öffnungen (106) darin verfügt und sich die flexiblen Komponenten (10) jedes Drehelements (8) durch eine Öffnung (106) im Schutzelement (104) erstrecken.

8. Sporteinrichtung (2, 102) nach einem der vorhergehenden Ansprüche, wobei die Mittel zum Drehen der Drehelemente (8) dazu ausgeführt sind, die Drehelemente (8) in einem ersten Abschnitt der im Wesentlichen durchgehenden Fläche mit einer ersten Geschwindigkeit zu drehen und die Drehelemente (8) in einem zweiten Abschnitt der im Wesentlichen durchgehenden Fläche mit einer zweiten Geschwindigkeit zu drehen, die verschieden von der ersten Geschwindigkeit ist.

## Revendications

1. Installation sportive (2, 102) destinée à être utilisée dans une activité sportive dans laquelle un utilisateur se déplace sur une surface, comprenant :
une structure de support (4) ;
une pluralité d'éléments rotatifs (8) montés sur la structure de support (4), chaque élément rotatif (8) ayant des composants flexibles (10) s'étendant depuis une partie centrale de l'élément rotatif (8), les éléments rotatifs (8) étant disposés de sorte que leurs composants flexibles (10) fournissent une surface sensiblement continue fournissant un support à un utilisateur pour une utilisation dans une activité sportive, et
un moyen pour faire tourner la pluralité d'éléments rotatifs (8), lorsque la pluralité d'éléments rotatifs (8) tourne, les composants flexibles (10) étant amenés à tourner dans un plan s'étendant selon un angle perpendiculaire à la surface sensiblement continue ; **caractérisée en ce que** le moyen pour faire tourner les éléments rotatifs (8) comprend un moteur (12) ; et les composants flexibles (10) comprennent des filaments, des poils ou des fibres.

2. Installation sportive (2, 102) selon la revendication 1, les éléments rotatifs (8) se présentant sous la forme de disques ou de roues.

3. Installation sportive (2, 102) selon la revendication 1 ou 2, les éléments rotatifs (8) étant disposés de sorte à tourner perpendiculairement à la surface sensiblement continue.

4. Installation sportive (2, 102) selon l'une quelconque des revendications précédentes, les éléments rotatifs (8) étant disposés en une pluralité de rangées, chaque rangée comprenant une pluralité d'éléments rotatifs (8) ; de préférence les axes longitudinaux d'au moins certaines des rangées d'éléments rotatifs (8) étant parallèles les uns aux autres ; de préférence encore les éléments rotatifs (8) dans une ou plusieurs rangées étant disposés pour tourner perpendiculaires à l'axe longitudinal de la rangée respective ; de préférence encore les éléments rotatifs dans des rangées adjacentes étant entrelacés pour former un motif de verrouillage.

5. Installation sportive selon l'une quelconque des revendications précédentes, les composants flexibles (10) ayant un diamètre de 0,1 à 5 mm, de préférence de 0,25 à 2,5 mm ; en particulier les composants flexibles (10) des éléments rotatifs (8) dans une première partie de la surface sensiblement continue ayant un premier diamètre et les composants flexibles (10) des éléments rotatifs (8) dans une seconde partie de la surface sensiblement continue ayant un second diamètre, différent du premier diamètre.

6. Installation sportive (2, 102) selon l'une quelconque des revendications précédentes, au moins une partie de la surface sensiblement continue étant curviligne.

7. Installation sportive (2, 102) selon l'une quelconque des revendications précédentes, un élément de protection (104) s'étendant sur les éléments rotatifs (8), l'élément de protection (104) étant pourvu d'une pluralité d'ouvertures (106) en son sein, des composants flexibles (10) de chaque élément rotatif (8) s'étendant à travers une ouverture (106) de l'élément de protection (104) .

8. Installation sportive (2, 102) selon l'une quelconque des revendications précédentes, les moyens pour faire tourner les éléments rotatifs (8) étant conçus pour faire tourner les éléments rotatifs (8) dans une première partie de la surface sensiblement continue à une première vitesse et pour faire tourner les éléments rotatifs (8) dans une seconde partie de la surface sensiblement continue à une seconde vitesse, différente de la première vitesse.
